# EUROPEAN PATENT SPECIFICATION

(11) **EP 3 432 655 B1**
(45) Date of publication and mention of the grant of the patent: **27.10.2021**
(21) Application number: 17779343.7
(22) Date of filing: 05.04.2017
(51) Int. Cl.: H04W 68/02, H04W 40/02, H04W 28/02, H04W 92/10, H04W 92/18

(54) **METHOD FOR TRANSMITTING AND RECEIVING DATA BY USING RELAY TERMINAL**
VERFAHREN ZUM SENDEN UND EMPFANGEN VON DATEN UNTER VERWENDUNG EINES RELAISANSCHLUSSES
PROCÉDÉ DE TRANSMISSION ET DE RÉCEPTION DES DONNÉES AU MOYEN D'UN TERMINAL DE RELAIS

(30) Priority: 05.04.2016 US 201662318237 P
(43) Date of publication of application: 23.01.2019
(73) Proprietor: LG Electronics Inc., Seoul 07336 (KR)
(72) Inventor: CHUN, Sungduck, Seoul 06772 (KR)
(74) Representative: Maikowski & Ninnemann Patentanwälte Partnerschaft mbB
(86) International application number: PCT/KR2017/003715
(87) International publication number: WO 2017/176043

(56) References cited:
- WO-A1-2015/026111
- WO-A1-2016/003750
- KR-A- 20090 035 799
- KR-A- 20120 034 991
- KR-A- 20150 099 560
- LG ELECTRONICS: "Pre-configured ProSe UE-to-Network Relay solution", 3GPP DRAFT; S2-140650_PROSE UE-TO-NETWORK RELAY_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Jose Del Cabo, Mexico; 20140217 - 20140221 12 February 2014 (2014-02-12), XP050765741, Retrieved from the Internet: URL:http://www.3gpp.org/ftp/tsg_sa/WG2_Arc h/TSGS2_101bis_Los_Cabos/Docs/ [retrieved on 2014-02-12]
- "3rd Generation Partnership Project; Technical Specification Group Services and System Aspects; Study on extended architecture support for proximity-based services (Release 13)", 3GPP STANDARD; 3GPP TR 23.713, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.5.0, 28 July 2015 (2015-07-28), pages 1-80, XP050995819,
- HUAWEI ET AL.: 'Discussion on Scenarios of UE-to-Network relay' R2-156524, 3GPP TSG-RAN WG2 MEETING #92 07 November 2015, ANAHEIM, US, XP051005920
- 'Relay select ion and reseleci ton' R2-1 56492, 3GPP TSG-RAN WG2 #92 07 November 2015, ANAHEIM, US, XP051005895

## Description

### TECHNICAL FIELD

The present invention relates to a wireless communication system, and more particularly, to a method for a remote terminal to transceive data with a base station via a relay terminal.

### BACKGROUND ART

The wireless communication system is being extensively developed in order to provide diverse types of communication devices, such as voice or data services, and so on. Generally, a wireless communication system corresponds to a multiple access system that can support communication with multiple users by sharing an available system source (bandwidth, transmission power, and so on). Examples of the multiple access system may include a CDMA (code division multiple access) system, a FDMA (frequency division multiple access) system, a TDMA (time division multiple access) system, an OFDMA (orthogonal frequency division multiple access) system, a SC-FDMA (single carrier frequency division multiple access) system, a MC-FDMA (multi carrier frequency division multiple access) system, and so on.

Device-to-Device (D2D) communication refers to a communication method that can directly send and receive voice, data, and so on, to and from user equipments without passing through a base station (evolved NodeB; eNB) by setting up a direct link between User Equipments (UEs). D2D communication may include methods, such as user equipment-to-user equipment (UE-to-UE) communication, Peer-to-Peer communication, and so on. Additionally, the D2D communication method may also be applied to M2M (Machine-to-Machine) communication, MTC (Machine Type Communication), and so on.

D2D communication is being considered as one of many solutions for resolving the load of the base station caused by the data traffic, which is increasing at a vast rate. For example, since data can be sent and received to and from user equipments without passing through the base station, unlike in a conventional (or legacy) wireless communication system, network overload may be reduced when using D2D communication. For example, LG ELECTRONICS: "Pre-configured ProSe UE-to-Network Relay solution", 3GPP DRAFT; S2-140650 PROSE UE-TO-NETWORK RELAY V2, 3RD GENERATION PARTNERSHIP PROJECT (3GPP), and WO 2015/026111 A1 relate to UE-to-Network Relay techniques. Also, "3rd Generation Partnership Project; Technical Specification Group Services and System Aspects; Study on extended architecture support for proximity-based services (Release 13)", 3GPP STANDARD; 3GPP TR 23.713, 3RD GENERATION PARTNERSHIP PROJECT (3GPP), relates to proximity-based services. WO 2016/003750 A1 exemplarily describes techniques for securely receiving critical communication content associated with a critical communication service.

### DISCLOSURE OF THE INVENTION

### TECHNICAL TASK

A technical task of the present invention is to provide a method for a remote terminal to transceive data with a base station via a relay terminal.

The technical problems solved by the present invention are not limited to the above technical problems and those skilled in the art may understand other technical problems from the following description.

### TECHNICAL SOLUTION

To achieve these and other advantages and in accordance with the purpose of the present invention, the subject-matter of the claims is presented. According to one example, a method of transmitting a paging message, which is transmitted to a user equipment (UE) 1 by a base station in a wireless communication system, includes the steps of selecting at least one transmission path from among a first transmission path for directly transmitting the paging message to the UE 1 based on data type information of a downlink data to be transmitted to the UE 1 and a second transmission path for transmitting the paging message to the UE 1 through a UE 2 that relays data transmission and reception between the UE 1 and the base station and transmitting the paging message to the UE 1 via the selected transmission path. In this case, the paging message transmitting step can transmit the paging message in consideration of at least one paging message monitoring time selected from among paging message monitoring time of the UE 1 and paging message monitoring time of the UE 2.

According to a different example, a method of transmitting a buffer status report, which is transmitted to a base station by a user equipment (UE) 1 in a wireless communication system, includes the steps of transmitting buffer status information of the UE 1 to the base station via a UE 2 that relays data transmission and reception between the UE 1 and the base station and receiving radio resource allocation information forwarded by the base station via the UE 2. In this case, the radio resource allocation information may correspond to information on a radio resource used for the UE 1 to transmit data to the UE 2.

It is to be understood that both the foregoing general description and the following detailed description of the present invention are exemplary and explanatory and are intended to provide further explanation of the invention as claimed.

### ADVANTAGEOUS EFFECTS

According to the present invention, it is able to reduce battery consumption of a remote UE in a manner that the remote UE transceives data with a base station by utilizing D2D communication with a relay UE.

According to the present invention, a base station is able to efficiently allocate a radio resource by utilizing D2D communication between a remote UE and a relay UE.

It will be appreciated by persons skilled in the art that the effects achieved by the present invention are not limited to what has been particularly described hereinabove and other advantages of the present invention will be more clearly understood from the following detailed description taken in conjunction with the accompanying drawings.

### DESCRIPTION OF DRAWINGS

The accompanying drawings, which are included to provide a further understanding of the invention and are incorporated in and constitute a part of this application, illustrate embodiment(s) of the invention and together with the description serve to explain the principle of the invention.
FIG. 1 is a block diagram illustrating network structure of an evolved universal mobile telecommunication system (E-UMTS);
FIG. 2 is a block diagram depicting architecture of a typical E-UTRAN and a typical EPC;
FIG. 3 is a diagram showing a control plane and a user plane of a radio interface protocol between a UE and an E-UTRAN based on a 3rd generation partnership project (3GPP) radio access network standard;
FIG. 4 is a diagram of an example physical channel structure used in an E-UMTS system;
FIG. 5 is a flow diagram illustrating a random access procedure;
FIG. 6 is a diagram illustrating a connection procedure in a radio resource control (RRC) layer;
FIG. 7 is a diagram for explaining a data transmission path of a remote UE according to one embodiment of the present invention;
FIGS. 8 to 9 are data flowcharts for explaining a data transmission/reception method according to one embodiment of the present invention;
FIG. 10 is a diagram illustrating an example of a buffer status report (BSR) defined in a prior system;
FIG. 11 is a data flowchart for explaining a method of transmitting a BSR (buffer status report) according to one embodiment of the present invention;
FIG. 12 is a diagram for explaining a BSR message format according to one embodiment of the present invention;
FIG. 13 is a diagram for explaining a sidelink BSR message format;
FIG. 14 is a block diagram of a communication apparatus according to an embodiment of the present invention.

### BEST MODE

### MODE FOR INVENTION

Universal mobile telecommunications system (UMTS) is a 3rd Generation (3G) asynchronous mobile communication system operating in wideband code division multiple access (WCDMA) based on European systems, global system for mobile communications (GSM) and general packet radio services (GPRS). The long-term evolution (LTE) of UMTS is under discussion by the 3rd generation partnership project (3GPP) that standardized UMTS.

The 3GPP LTE is a technology for enabling high-speed packet communications. Many schemes have been proposed for the LTE objective including those that aim to reduce user and provider costs, improve service quality, and expand and improve coverage and system capacity. The 3G LTE requires reduced cost per bit, increased service availability, flexible use of a frequency band, a simple structure, an open interface, and adequate power consumption of a terminal as an upper-level requirement.

Hereinafter, structures, operations, and other features of the present invention will be readily understood from the embodiments of the present invention, examples of which are illustrated in the accompanying drawings. Embodiments described later are examples in which technical features of the present invention are applied to a 3GPP system.

Although the embodiments of the present invention are described using a long term evolution (LTE) system and a LTE-advanced (LTE-A) system in the present specification, they are purely exemplary. Therefore, the embodiments of the present invention are applicable to any other communication system corresponding to the above definition. In addition, although the embodiments of the present invention are described based on a frequency division duplex (FDD) scheme in the present specification, the embodiments of the present invention may be easily modified and applied to a half-duplex FDD (H-FDD) scheme or a time division duplex (TDD) scheme.

The terms used in this specification are defined as follows.
- UE (User Equipment): A user equipment. The UE may be referred to as a terminal, ME (Mobile Equipment), MS (Mobile Station), or the like. The UE may be a portable device such as a notebook computer, cellular phone, PDA (Personal Digital Assistant), smartphone, and multimedia device, or may be a nonportable device such as a PC (Personal Computer) and vehicle-mounted device. In the present invention, a UE can be regarded as a UE capable of receiving an MCPTT (Mission Critical Push To Talk) service, i.e., MCPTT capable UE.
- Proximity Services (or ProSe Service or Proximity based Service): a service that enables discovery between physically proximate devices, mutual direct communication through a base station, or communication through the third party device. Here, user plane data are exchanged through a direct data path without through a 3GPP core network (for example, EPC).
- ProSe Communication: communication between two or more ProSe-enabled UEs in proximity by means of a ProSe Communication path. Unless explicitly stated otherwise, the term "ProSe Communication" refers to any/all of the following: ProSe E-UTRA Communication, ProSe-assisted WLAN direct communication between two UEs, ProSe Group Communication and ProSe Broadcast Communication.
- ProSe Discovery: a process that identifies that a UE that is ProSe-enabled is in proximity of another, using E-UTRA.
- ProSe Group Communication: one-to-many ProSe Communication, which uses a common communication path, between more than two ProSe-enabled UEs in proximity.
- ProSe UE-to-Network Relay: ProSe-enabled Public Safety UE that acts as a communication relay between a ProSe-enabled UE and the ProSe-enabled network using E-UTRA.
- Remote UE: This is a Prose-enabled UE connected to EPC network, i.e. perform communication with a PDN, through Prose UE-to-Network Relay without service from E-UTRAN.
- ProSe UE-to-UE relay: a form of relay in which a ProSe-enabled UE acts as a ProSe Communication relay between two other ProSe-enabled UEs.
- ProSe-enabled Network: a network that supports ProSe Discovery, ProSe Communication and/or ProSe-assisted WLAN direct communication. Hereinafter, the ProSe-enabled network may simply be referred to as a network.

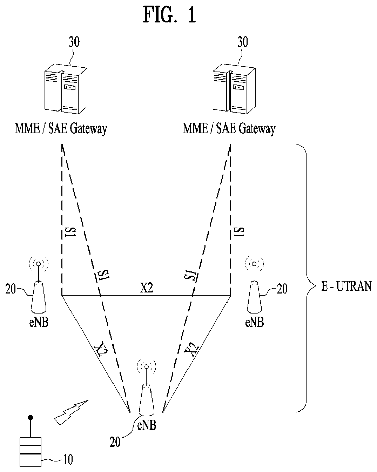

FIG. 1 is a block diagram illustrating network structure of an evolved universal mobile telecommunication system (E-UMTS). The E-UMTS may be also referred to as an LTE system. The communication network is widely deployed to provide a variety of communication services such as voice (VoIP) through IMS and packet data.

As illustrated in FIG. 1, the E-UMTS network includes an evolved UMTS terrestrial radio access network (E-UTRAN), an Evolved Packet Core (EPC) and one or more user equipment. The E-UTRAN may include one or more evolved NodeB (eNodeB) 20, and a plurality of user equipment (UE) 10 may be located in one cell. One or more E-UTRAN mobility management entity (MME)/system architecture evolution (SAE) gateways 30 may be positioned at the end of the network and connected to an external network.

As used herein, "downlink" refers to communication from eNodeB 20 to UE 10, and "uplink" refers to communication from the UE to an eNodeB. UE 10 refers to communication equipment carried by a user and may be also referred to as a mobile station (MS), a user terminal (UT), a subscriber station (SS) or a wireless device.

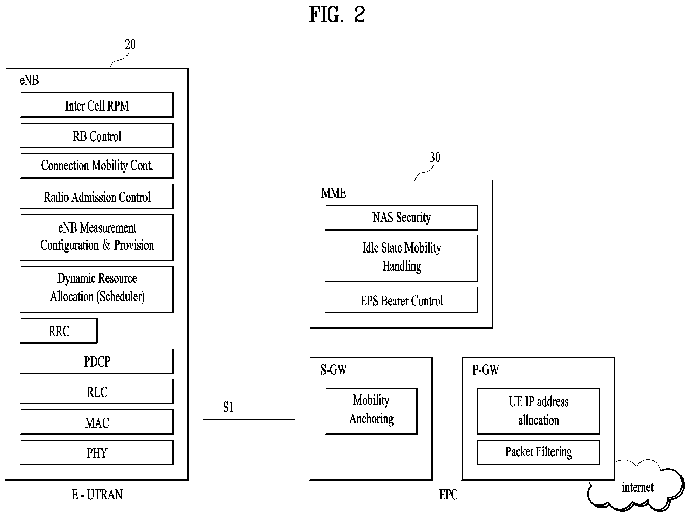

FIG. 2 is a block diagram depicting architecture of a typical E-UTRAN and a typical EPC.

As illustrated in FIG. 2, an eNodeB 20 provides end points of a user plane and a control plane to the UE 10. MME/SAE gateway 30 provides an end point of a session and mobility management function for UE 10. The eNodeB and MME/SAE gateway may be connected via an S1 interface.

The eNodeB 20 is generally a fixed station that communicates with a UE 10, and may also be referred to as a base station (BS) or an access point. One eNodeB 20 may be deployed per cell. An interface for transmitting user traffic or control traffic may be used between eNodeBs 20.

The MME provides various functions including NAS signaling to eNodeBs 20, NAS signaling security, AS Security control, Inter CN node signaling for mobility between 3GPP access networks, Idle mode UE Reachability (including control and execution of paging retransmission), Tracking Area list management (for UE in idle and active mode), PDN GW and Serving GW selection, MME selection for handovers with MME change, SGSN selection for handovers to 2G or 3G 3GPP access networks, Roaming, Authentication, Bearer management functions including dedicated bearer establishment, Support for PWS (which includes ETWS and CMAS) message transmission. The SAE gateway host provides assorted functions including Per-user based packet filtering (by e.g. deep packet inspection), Lawful Interception, UE IP address allocation, Transport level packet marking in the downlink, UL and DL service level charging, gating and rate enforcement, DL rate enforcement based on APN-AMBR. For clarity MME/SAE gateway 30 will be referred to herein simply as a "gateway," but it is understood that this entity includes both an MME and an SAE gateway.

A plurality of nodes may be connected between eNodeB 20 and gateway 30 via the S1 interface. The eNodeBs 20 may be connected to each other via an X2 interface and neighboring eNodeBs may have a meshed network structure that has the X2 interface.

As illustrated, eNodeB 20 may perform functions of selection for gateway 30, routing toward the gateway during a Radio Resource Control (RRC) activation, scheduling and transmitting of paging messages, scheduling and transmitting of Broadcast Channel (BCCH) information, dynamic allocation of resources to UEs 10 in both uplink and downlink, configuration and provisioning of eNodeB measurements, radio bearer control, radio admission control (RAC), and connection mobility control in LTE_ACTIVE state. In the EPC, and as noted above, gateway 30 may perform functions of paging origination, LTE-IDLE state management, ciphering of the user plane, System Architecture Evolution (SAE) bearer control, and ciphering and integrity protection of Non-Access Stratum (NAS) signaling.

The EPC includes a mobility management entity (MME), a serving-gateway (S-GW), and a packet data network-gateway (PDN-GW). The MME has information about connections and capabilities of UEs, mainly for use in managing the mobility of the UEs. The S-GW is a gateway having the E-UTRAN as an end point, and the PDN-GW is a gateway having a packet data network (PDN) as an end point.

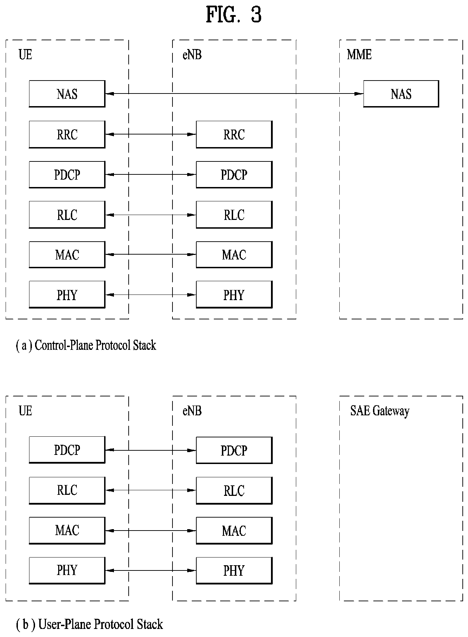

FIG. 3 is a diagram showing a control plane and a user plane of a radio interface protocol between a UE and an E-UTRAN based on a 3GPP radio access network standard. The control plane refers to a path used for transmitting control messages used for managing a call between the UE and the E-UTRAN. The user plane refers to a path used for transmitting data generated in an application layer, e.g., voice data or Internet packet data.

A physical (PHY) layer of a first layer provides an information transfer service to a higher layer using a physical channel. The PHY layer is connected to a medium access control (MAC) layer located on the higher layer via a transport channel. Data is transported between the MAC layer and the PHY layer via the transport channel. Data is transported between a physical layer of a transmitting side and a physical layer of a receiving side via physical channels. The physical channels use time and frequency as radio resources. In detail, the physical channel is modulated using an orthogonal frequency division multiple access (OFDMA) scheme in downlink and is modulated using a single carrier frequency division multiple access (SC-FDMA) scheme in uplink.

The MAC layer of a second layer provides a service to a radio link control (RLC) layer of a higher layer via a logical channel. The RLC layer of the second layer supports reliable data transmission. A function of the RLC layer may be implemented by a functional block of the MAC layer. A packet data convergence protocol (PDCP) layer of the second layer performs a header compression function to reduce unnecessary control information for efficient transmission of an Internet protocol (IP) packet such as an IP version 4 (IPv4) packet or an IP version 6 (IPv6) packet in a radio interface having a relatively small bandwidth.

A radio resource control (RRC) layer located at the bottom of a third layer is defined only in the control plane. The RRC layer controls logical channels, transport channels, and physical channels in relation to configuration, re-configuration, and release of radio bearers (RBs). An RB refers to a service that the second layer provides for data transmission between the UE and the E-UTRAN. To this end, the RRC layer of the UE and the RRC layer of the E-UTRAN exchange RRC messages with each other.

One cell of the eNB is set to operate in one of bandwidths such as 1.25, 2.5, 5, 10, 15, and 20 MHz and provides a downlink or uplink transmission service to a plurality of UEs in the bandwidth. Different cells may be set to provide different bandwidths.

Downlink transport channels for transmission of data from the E-UTRAN to the UE include a broadcast channel (BCH) for transmission of system information, a paging channel (PCH) for transmission of paging messages, and a downlink shared channel (SCH) for transmission of user traffic or control messages. Traffic or control messages of a downlink multicast or broadcast service may be transmitted through the downlink SCH and may also be transmitted through a separate downlink multicast channel (MCH).

Uplink transport channels for transmission of data from the UE to the E-UTRAN include a random access channel (RACH) for transmission of initial control messages and an uplink SCH for transmission of user traffic or control messages. Logical channels that are defined above the transport channels and mapped to the transport channels include a broadcast control channel (BCCH), a paging control channel (PCCH), a common control channel (CCCH), a multicast control channel (MCCH), and a multicast traffic channel (MTCH).

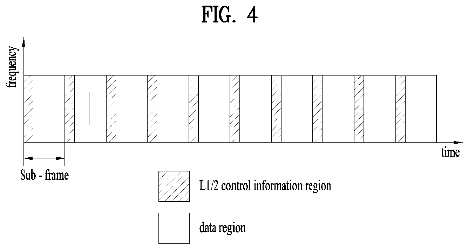

FIG. 4 is a view showing an example of a physical channel structure used in an E-UMTS system. A physical channel includes several subframes on a time axis and several subcarriers on a frequency axis. Here, one subframe includes a plurality of symbols on the time axis. One subframe includes a plurality of resource blocks and one resource block includes a plurality of symbols and a plurality of subcarriers. In addition, each subframe may use certain subcarriers of certain symbols (e.g., a first symbol) of a subframe for a physical downlink control channel (PDCCH), that is, an L1/L2 control channel. In FIG. 4, an L1/L2 control information transmission area (PDCCH) and a data area (PDSCH) are shown. In one embodiment, a radio frame of 10 ms is used and one radio frame includes 10 subframes. In addition, one subframe includes two consecutive slots. The length of one slot may be 0.5 ms. In addition, one subframe includes a plurality of OFDM symbols and a portion (e.g., a first symbol) of the plurality of OFDM symbols may be used for transmitting the L1/L2 control information. A transmission time interval (TTI) which is a unit time for transmitting data is 1ms.

A base station and a UE mostly transmit/receive data via a PDSCH, which is a physical channel, using a DL-SCH which is a transmission channel, except a certain control signal or certain service data. Information indicating to which UE (one or a plurality of UEs) PDSCH data is transmitted and how the UE receive and decode PDSCH data is transmitted in a state of being included in the PDCCH.

For example, in one embodiment, a certain PDCCH is CRC-masked with a radio network temporary identity (RNTI) "A" and information about data is transmitted using a radio resource "B" (e.g., a frequency location) and transmission format information "C" (e.g., a transmission block size, modulation, coding information or the like) via a certain subframe. Then, one or more UEs located in a cell monitor the PDCCH using its RNTI information. And, a specific UE with RNTI "A" reads the PDCCH and then receive the PDSCH indicated by B and C in the PDCCH information.

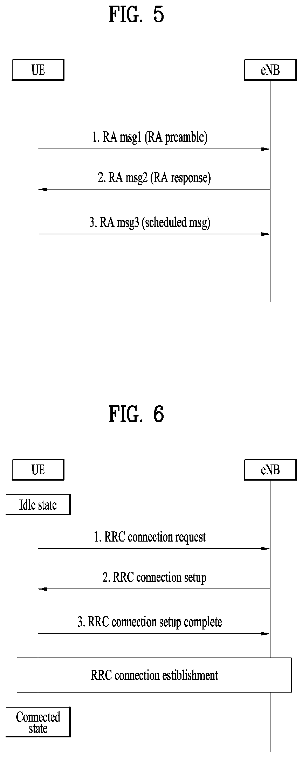

FIG. 5 is a flowchart illustrating a random access procedure in 3GPP LTE.

The random access procedure is used for a UE to obtain UL synchronization with a base station or to be assigned a UL radio resource.

The UE receives a root index and a physical random access channel (PRACH) configuration index from an eNB. Each cell has 64 candidate random access preambles defined by a Zadoff-Chu (ZC) sequence. The root index is a logical index used for the UE to generate 64 candidate random access preambles.

Transmission of a random access preamble is limited to a specific time and frequency resources for each cell. The PRACH configuration index indicates a specific subframe and preamble format in which transmission of the random access preamble is possible.

The random access procedure, in particular, a contention-based random access procedure, includes the following three steps. Messages transmitted in the following steps 1, 2, and 3 are referred to as msg1, msg2, and msg4, respectively.

The UE transmits a randomly selected random access preamble to the eNodeB. The UE selects a random access preamble from among 64 candidate random access preambles and the UE selects a subframe corresponding to the PRACH configuration index. The UE transmits the selected random access preamble in the selected subframe.

Upon receiving the random access preamble, the eNB sends a random access response (RAR) to the UE. The RAR is detected in two steps. First, the UE detects a PDCCH masked with a random access (RA)-RNTI. The UE receives an RAR in a MAC (medium access control) PDU (protocol data unit) on a PDSCH indicated by the detected PDCCH. The RAR includes timing advance (TA) information indicating timing offset information for UL synchronization, UL resource allocation information (UL grant information), and a temporary UE identifier (e.g., a temporary cell-RNTI (TC-RNTI)).

The UE may perform UL transmission according to resource allocation information (i.e., scheduling information) and a TA value in the RAR. HARQ is applied to UL transmission corresponding to the RAR. Accordingly, after performing UL transmission, the UE may receive reception response information (e.g., a PHICH) corresponding to UL transmission.

FIG. 6 illustrates a connection procedure in a radio resource control (RRC) layer.

As shown in FIG. 6, the RRC state is set according to whether or not RRC connection is established. An RRC state indicates whether or not an entity of the RRC layer of a UE has logical connection with an entity of the RRC layer of an eNB. An RRC state in which the entity of the RRC layer of the UE is logically connected with the entity of the RRC layer of the eNB is called an RRC connected state. An RRC state in which the entity of the RRC layer of the UE is not logically connected with the entity of the RRC layer of the eNB is called an RRC idle state.

A UE in the connected state has RRC connection, and thus the E-UTRAN may recognize presence of the UE in a cell unit. Accordingly, the UE may be efficiently controlled. On the other hand, the eNB cannot recognize presence of a UE which is in the idle state. The UE in the idle state is managed by the core network in a tracking area unit which is an area unit larger than the cell. The tracking area is a unit of a set of cells. That is, for the UE which is in the idle state, only presence or absence of the UE is recognized in a larger area unit. In order for the UE in the idle state to be provided with a usual mobile communication service such as a voice service and a data service, the UE should transition to the connected state.

When the user initially turns on the UE, the UE searches for a proper cell first, and then stays in the idle state. Only when the UE staying in the idle state needs to establish RRC connection, does the UE establish RRC connection with the RRC layer of the eNB through the RRC connection procedure and then transition to the RRC connected state.

The UE staying in the idle state needs to establish RRC connection in many cases. For example, the cases may include an attempt of a user to make a phone call, an attempt to transmit data, or transmission of a response message after reception of a paging message from the E-UTRAN.

In order for the UE in the idle state to establish RRC connection with the eNodeB, the RRC connection procedure needs to be performed as described above. The RRC connection procedure is broadly divided into transmission of an RRC connection request message from the UE to the eNB, transmission of an RRC connection setup message from the eNB to the UE, and transmission of an RRC connection setup complete message from the UE to eNB, which are described in detail below with reference to FIG. 6.

When the UE in the idle state desires to establish RRC connection for reasons such as an attempt to make a call, a data transmission attempt, or a response of the eNB to paging, the UE transmits an RRC connection request message to the eNB first.

Upon receiving the RRC connection request message from the UE, the eNB accepts the RRC connection request of the UE when the radio resources are sufficient, and then transmits an RRC connection setup message, which is a response message, to the UE.

Upon receiving the RRC connection setup message, the UE transmits an RRC connection setup complete message to the eNB.

Only when the UE successfully transmits the RRC connection setup complete message, does the UE establish RRC connection with the eNB and transition to the RRC connected mode.

A ProSe service is referred to as D2D (Device-to-Device) communication and corresponds to a direct communication technology between UEs. According to a legacy cellular communication technology, although communication is performed between UEs adjacent to each other, a user data transmitted by a transmission UE is forwarded to a network via a base station and the data is forwarded to reception UEs via the base station. According to the legacy cellular communication technology, QoS of a certain level is guaranteed via the management of the network. In particular, since a specific base station is able to schedule radio resources used by UEs belonging to a cell of the specific base station, it may be able to maximize the utilization of radio resources.

However, a radius of a cell managed by each base station varies ranging from dozens of meters to several kilometers. In this case, in order for a UE away from the center of a cell to communicate with a base station managing the cell, the UE should use more power compared to a UE positioned in the vicinity of the cell. In particular, when it is necessary to perform prompt communication between UEs in an emergency situation, if data is forwarded via a base station, transmission latency may become a problem.

In order to solve the problem, 3GPP has additionally introduced such a technology as ProSe or D2D to support direct communication between UEs. In addition, ProSe has introduced such a technology as UE-to-Network Relay. When a UE (UE 1) is positioned at a location incapable of directly receiving a signal from a base station, a UE (UE 2) is positioned at a location capable of directly receiving a signal from the base station, and the two UEs are able to perform direct communication, the UE 2 can relay data to the UE 1 via the UE-to-Network Relay technology.

If the UE-to-network relay method is used, since a UE transceives data with a relay UE positioned within a short distance rather than transceives data with a base station consuming greater energy, it is able to reduce energy consumption.

However, according to a legacy ProSe operation, a UE transceives data with other UEs positioned near the UE while maintaining a direct connection with an eNB. In case of a user data, since the user data is able to be directly exchanged with a nearby UE, it may be able to reduce battery consumption compared to a case of forwarding data via a base station. However, since it is necessary to directly exchange an RRC message, which is transceived between a UE and an eNB, with the eNB, it is unable to maintain minimum battery consumption.

In order to optimize the battery consumption, a method of forwarding the RRC message via a relay UE is considering. However, if it fails to properly allocate a radio resource between the relay UE and a remote UE, since data transmitted from the remote UE to a network is not forwarded within predetermined time, QoS or QoE (Quality of Experience) can be deteriorated.

Recently, a new wearable device such as a smart watch, a smart glass, and the like is rapidly disseminated in the market. However, most customers are unhappy about the short use time of the device. This is because it is unable to install a high-capacity battery due to a physical limitation. In order to overcome the limitation, UE-to-Network Relay in Prose is considering. In particular, although direct communication of a wearable device is available within a base station, battery consumption can be reduced by using nearby UE-to-Network Relay.

However, a user does not always carry a wearable device and a smartphone at the same time. For example, when a user is out for jogging, the user may wear the wearable device only. In this case, if data generated at the wearable device is transmitted via the smartphone only, no data can be transmitted and received in the wearable device. Specifically, when a user uses voice call supported by the UE-to-network relay scheme, if the user wearing the wearable device only is out, the voice call can be disconnected.

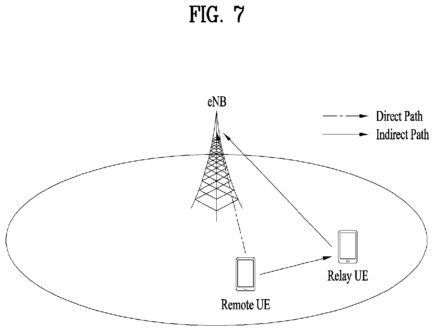

The present invention proposes a method for solving the aforementioned problems. The method is explained in detail with reference to FIGS. 7 to 14.

FIG. 7 is a diagram for explaining a method for a remote UE to transmit data to an eNB using a ProSe service according to an embodiment of the present invention.

Referring to FIG. 7, a remote UE can forward data to an eNB via two paths. One is a direct path corresponding to a path on which data is directly transmitted to the eNB by the remote UE and another is an indirect path on which data is forwarded to the eNB by the remote UE via a relay UE.

In particular, when the remote UE uses the direct path, the remote UE transmits data to the eNB via a Uu interface. When the remote UE uses the indirect path, the remote UE transmits data to be transmitted to the eNB to the relay UE via a ProSe service (i.e., PC5 interface). Having received the data, the relay UE transmits the data to the eNB via Uu interface. In particular, the indirect path transmits data to the eNB from the remote UE via UE-to-network relay.

In this case, if the remote UE appropriately selects a path on which data is to be transmitted from among a direct path and an indirect path and transmits the data to the eNB via the selected path, a user of the remote UE is able to receive a communication service having quality equal to or greater than a certain level all the time. In particular, if the remote UE determines a path on which a generated data is to be transmitted based on a predetermined condition including a type of data, characteristic, and the like and transmits the data according to the determined path, it is able to provide a user with QoS and QoE equal to or greater than a certain level.

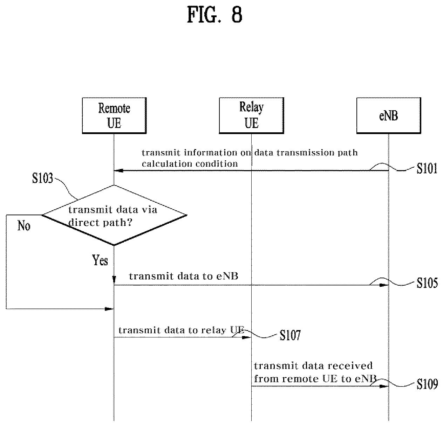

Regarding this, it is explained in detail with reference to FIG. 8 in the following.

FIG. 8 is a flowchart for explaining a method for a remote UE to determine a transmission path and transmit generated data via the determined path according to one embodiment of the present invention.

Referring to FIG. 8, a remote UE receives information on a data transmission path calculation condition from an eNB to determine a path on which a generated data is to be transmitted [S101]. In this case, the information on the data transmission path calculation condition can be transmitted to the remote UE via an SIB (System Information Block) or NAS (Non-Access Stratum) signaling. And, it may be able to omit the step S101. In this case, the information on the data transmission path calculation condition can be stored in advance in the remote UE

The remote UE determines a path on which data, which is generated in consideration of the data transmission path calculation condition, is to be transmitted [S103]. In this case, as a condition capable of being included in the data transmission path calculation condition, it may consider examples described in the following.
1. It may consider service type or service information to be provided to a user via a generated data.
   In this case, the service type or the service information may correspond to a voice call service such as MMTel (Multimedia Telephony), a video call service such as MMVideo (Multimedia Video), an internet browsing service, or SMS (Short Message Service). Specifically, in case of a service such as voice call, if data transmission is interrupted or latency occurs in the middle of performing the voice call, QoE can be deteriorated. In this case, a network can configure voice call data to be always transmitted and received with a base station using direct communication only irrespective of whether or not there is a nearby UE supporting UE-to-network relay. In addition, it may be able to configure a data transmission path not to be changed in the middle of transmitting and receiving voice call data.
   Meanwhile, in case of an internet browsing service, although an IP address is changed or interruption occurs during several seconds in the middle of transmitting and receiving data, there is no considerable influence on QoE of a user. In case of the internet browsing service, although an indirect path using UE-to-network relay and a direct path using Uu interface are changed in the middle of a data session, no major issue occurs. In particular, it may use any path or it may be able to configure a path to be changed in the middle of the data session.
   In other word, when a data transmission path is selected based on a type of a service, it may consider whether or not the service requires service continuity. For example, when a service is in progress, it is necessary to consider information on whether or not a data path is changed between an indirect path via UE-to-network relay and a direct path using Uu interface.
   Or, the service type or the service information may correspond to information on an application providing the service. For example, the service type or the service information may correspond to an identifier for an application recognized by Android, IOS, or a different OS. Besides, the service type or the service information can include a specific identifier, a specifically designated IP address, a specifically designated port number, a specifically designated application identifier, and the like.
2. It may consider characteristic information of a service to be provided to a user via a generated data or characteristic information of the generated data.
   For example, it may consider a range of data transmission delay time (a range of data delay) capable of being permitted to maintain QoE of a user in a corresponding service, a range of a bit rate necessary for guaranteeing QoE equal to or greater than a certain level, a range of an error rate, and the like. And, it may also consider information on whether or not a service is usable irrespective of the change of an IP address in the middle of providing the service. And, it may be able to configure a path and a condition based on traffic using a TFT (Traffic Flow Template).
   Additionally, it may be able to provide the UE with information on whether a corresponding service is used in in-coverage only, out-of-coverage only, or both in-coverage and out-of-coverage irrespective of a position of a remote UE. In particular, when a certain service is configured not to be provided when a remote UE is positioned at the out-of-coverage of a base station, although there is a relay UE capable of performing UE-to-network relay in the vicinity of the remote UE, the remote UE is unable to transmit data to the base statin using an indirect path. In other word, the remote UE is unable to receive the service.
3. It may consider information on other predetermined conditions.

For example, although an indirect path is usable via the aforementioned information, it may consider information on whether a corresponding service is provided on an indirect path configured by WLAN only, an indirect path configured by PC5-based technology only, or both of the indirect paths. In this case, although a certain service is configured to use an indirect path, when the indirect path is additionally configured to be available only when the indirect path corresponds to an indirect path based on 3GPP PC5 interface, if a remote UE is connected with a relay UE via WLAN, the remote UE does not transmit the service data via the indirect path.

As a different example, a network may forwards information on a path on which a NAS message such as EMM (EPS Mobility Management) or ESM (EPS Session Management), or an RRC message related to the NAS message is transmitted to a remote UE. Specifically, when an RRC message is configured to be transmitted via a direct path only, although PC5 connection is established between the remote UE and the relay UE, the remote UE directly transmits the RRC message to an eNB via Uu interface.

The remote UE determines a path on which a generated data is to be transmitted from among a direct path and an indirect path based on the aforementioned data transmission path calculation condition [S103]. If the remote UE determines to transmit the data via the direct path, the remote UE transmits the generated data to the eNB via Uu interface [S105]. If the remote UE determines to transmit the data via the indirect path, the remote UE transmits the generated data to the relay UE via PC5 interface [S107] and the relay UE transmits the data received from the remote UE to the eNB via Uu interface [S109].

Meanwhile, when the remote UE determines a transmission path in the step S103 and transmits data, if service characteristic or data characteristic is changed or a user requests a different type of service, the remote UE can determine whether or not a transmission path is changed.

For example, if a remote UE receives new data from an upper entity, the remote UE determines whether or not a transmission path is changed in consideration of a data transmission path calculation condition and a type and characteristic of the new data and can transmit data to the base station. As a specific example, assume that the remote UE receives a voice call service provision request from a user in the middle of providing an internet browsing service via a relay UE, i.e., an indirect path. If a voice call service is configured to be provided via a direct path only, the remote UE transmits data related to the voice call to the base station via Uu interface by changing a data transmission path. In this case, in order for the remote UE to change a transmission path from an indirect path to a direct path, the remote UE cancels a connection with the relay UE. The remote UE directly establishes an RRC connection with the base station via Uu interface or transmits an NAS service request message.

In the foregoing description, when a user has requested a voice call service provision, if the user still wants to receive an internet browsing service as well, the user can transmit and receive data using both a direct path and an indirect path. In particular, the voice call-related data is transmitted and received via a direct path, whereas internet browsing service-related data can be transmitted and received via an indirect path.

Meanwhile, in the aforementioned process, a remote UE or a relay UE should be able to receive data arrived at each of the UEs from a network. In this case, since a data transmission path of the remote UE varies depending on a provided service, it is necessary to consider a path of data received by each UE in a manner of being similar to the process mentioned earlier in FIG. 8. For example, if data of a specific service is configured to use a direct path only, a DL data or a DL paging message of the specific service can be transmitted via the direct path as well.

In particular, when a connection for UE-to-network relay is established between a remote UE and a relay UE, it may be able to inform the remote UE of information on whether or not the remote UE directly receives a paging message transmitted by an eNB or information on whether or not a paging channel is consistently monitored. Or, as a default operation, the remote UE can be configured to always monitor a paging channel of a cell to which the UE belongs irrespective of whether or not the remote UE is connected with the relay UE. In this case, when the remote UE receives a paging message, it may be able to additionally configure the remote UE to transmit a paging response message to an eNB by performing RRC connection procedure or forward a paging response message to the eNB via the relay UE.

In FIG. 8, a method for a remote UE to determine a data transmission path using a data transmission path calculation condition and a method of transmitting UL data to a base station have been described. Meanwhile, it is also necessary for a base station to determine a transmission path using a data transmission path calculation condition such as a type and characteristic of a service and a type and characteristic of data and transmit DL data to a remote UE according to a determined transmission path.

In the following, a method for a base station to determine a transmission path for transmitting DL data is explained.

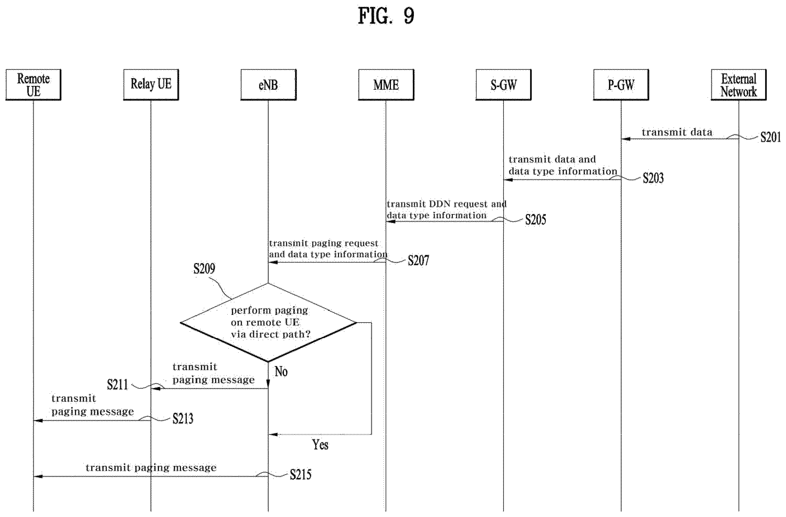

FIG. 9 is a flowchart for explaining a method for an eNB to determine a transmission path for transmitting data to a remote UE according to an embodiment of the present invention.

Referring to FIG. 9, a P-GW receives data to be transmitted to a remote UE from an external network [S201]. The P-GW identifies a characteristic and a type of the received data, an application related to the received data, information on a service, and generates data type information based on an identified result.

Meanwhile, the generated data type information can include a characteristic and a type of the received data, an application related to the received data, or information on a service. And, the data type information can also include the data transmission path calculation condition mentioned earlier in FIG. 8. An example of a data transmission path calculation condition becoming a reference for determining a transmission path in FIG 9 may be identical or similar to an example of the data transmission path calculation condition mentioned earlier in FIG. 8.

Meanwhile, data type information can be determined and generated not only by the P-GW but also by an S-GW, an MME, or an eNB described in the following. In particular, it is not mandatory that the data type information is generated by the P-GW. The S-GW, the MME, or the eNB identifies an application related to a received data, information on a service, and the like and may be then able to generate data type information based on the application or the information. In this case, of course, the data type information generated by the S-GW, the MME, or the eNB can include the data transmission path calculation condition as well.

The P-GW transmits the generated data type information to the S-GW together with the received data [S203]. The S-GW determines a remote UE to which the data received from the P-GW is to be transmitted. If E-RAB (E-UTRAN Radio Access Bearer) is not set to the determined remote UE, the S-GW transmits a DDN (Downlink Data Notification) request message for requesting to page the remote UE or a relay UE connected with the remote UE to the MME together with the data type information [S205].

Having received the DDN request, the MME configures a paging message and transmits the paging message to the eNB together with data type information [S207]. The eNB determines a path for performing paging on the remote UE from among a direct path and an indirect path in consideration of the received paging message and the data type information [S209]. If the eNB determines to perform paging via an indirect path, the eNB transmits the paging message to the relay UE [S211]. Having received the paging message, the relay UE forwards the paging message to the remote UE [S213].

Meanwhile, in the step S211, in order to minimize power consumption of the relay UE, the eNB can transmit the paging message in accordance with timing of monitoring a paging message for processing data generated in an application of the relay UE or a paging message monitoring period. In particular, when the relay UE attempts to receive a paging message for processing data of the relay UE, the eNB can transmit a paging message to be forwarded to the remote UE.

If the eNB determines to perform paging on the remote UE via a direct path, the eNB transmits a paging message to the remote UE via Uu interface [S215]. In this case, the eNB can transmit the paging message in accordance with timing of monitoring a paging message to be monitored by the remote UE or a paging message monitoring period to make the remote UE receive the paging message.

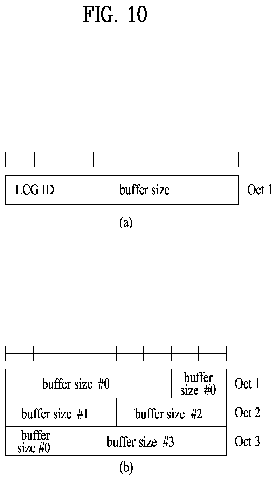

FIG. 10 is a diagram illustrating an example of a buffer status report (BSR) defined in a prior system. In particular, (a) of FIG. 10 illustrates a data structure of a short BSR, and (b) of FIG. 10 illustrates a data structure of a long BSR.

Referring to FIG. 10, whether the user equipment selects and transmits which one of short BSR and long BSR will be determined on the basis of the number of logical channel groups (LCG) where uplink data exist. In other words, the user equipment transmits the short BSR if there are data to be transmitted to one LCG only, and the user equipment transmits the long BSR if there are data to be transmitted to two or more LCGs. In this case, the LCG means that several logical channels of which quality of service (QoS) is similar to one another are grouped. In the current LTE system, four LCGs having LCG IDs of 0 to 3 are used. The base station notifies the user equipment of a logical channel group (LCG) to which the logical channel of the radio bearer (RB) belongs, when the radio bearer (RB) is established.

Also, the user equipment transmits the short BSR together with logical channel group (LCG) ID to indicate a logical channel group (LCG) to which a buffer size field representing buffer size corresponds. However, the user equipment transmits the long BSR including buffer size field in the order of the logical channel group having LCG ID of 0 to the logical channel group having LCG ID of 3 without LCG ID.

When a UE has UL data to be transmitted to a base station, The BSR plays a role in informing the base station of an amount of data stacked on a buffer of the UE. In order to efficiently use a radio resource in LTE system, it is necessary for a base station to know a data type and an amount of data to be transmitted by a user. In case of a downlink (DL) data, the DL data is forwarded to a base station from an access gateway. Hence, the base station knows an amount of data to be forwarded to each user in DL. On the contrary, in case of an uplink (UL) data, if a UE does not directly inform a base station of information on data to be forwarded in UL, the base station is unable to know an amount of UL radio resources required by each UE. In particular, in order to make the base station appropriately allocate a UL radio resource to a UE, it is necessary for each UE to provide the base station with information necessary for the base station to schedule a radio resource.

To this end, if a UE has data to be transmitted by the UE, the UE informs a base station of information on the data. The base station forwards a resource allocation message to the UE based on the information.

Meanwhile, the BSR is generated in a form of a MAC control element and is transmitted to the base station in a manner of being included in MAC PDU. In particular, it is necessary to have a radio resource in UL to transmit the BSR. This means that it is necessary to transmit UL radio resource allocation request information to transmit the BSR. When the BSR is generated, if there is an allocated UL radio resource, a UE immediately transmits the BSR using the allocated UL radio resource. A procedure for the UE to transmit the BSR to the base station is referred to as a BSR procedure.

In this case, the BSR is not directly related to a user data corresponding to data to be actually transceived between the UE and the base station. In particular, the BSR is used for forwarding information necessary for the base station to more efficiently allocate a radio resource to the UE. The BSR does not forward actual user data. In particular, it is necessary to configure a BSR with a minimum size to reduce the waste of a radio resource used for transmitting the BSR. Hence, it is preferable to configure the BSR as simple as possible.

Meanwhile, a UE has a plurality of logical channels and each of a plurality of the logical channels has a different priority. For example, when a base station and a UE use an SRB (Signaling Radio Bearer) to transceive an RRC control message (RRC message) between the base station and the UE, if data exists in the SRB, the UE should inform the base station of the existence of the data as soon as possible. If data exists in the SRB, the base station allocates a radio resource to the UE with top priority. On the contrary, if data exists in a logical channel for VoIP, UEs other than the UE exist in the cell, the UEs configure a channel having a priority higher than a priority of the VoIP, and data exists in the channel having the higher priority, it is not necessary for the UE to immediately transmit a BSR to the base station and the it is not necessary for the base station to immediately allocate a radio resource to the UE. In particular, it is preferable to configure the BSR to have information as much as possible in consideration of a difference between channels. In particular, in this case, since the greater the BSR includes more detail information, a scheduler of the base station may have better performance.

Hence, the present invention proposes a method of efficiently forwarding a buffer status report of a remote UE to an eNB and a method of minimizing power consumption of a remote UE. Specifically, after a relay UE and a remote UE establish a connection using PC5 interface, if the remote UE forwards information (i.e., BSR) on an amount of UL data to be transmitted by the remote UE to the relay UE using the PC5 interface, the relay UE can transmit the BSR received from the remote UE to an eNB.

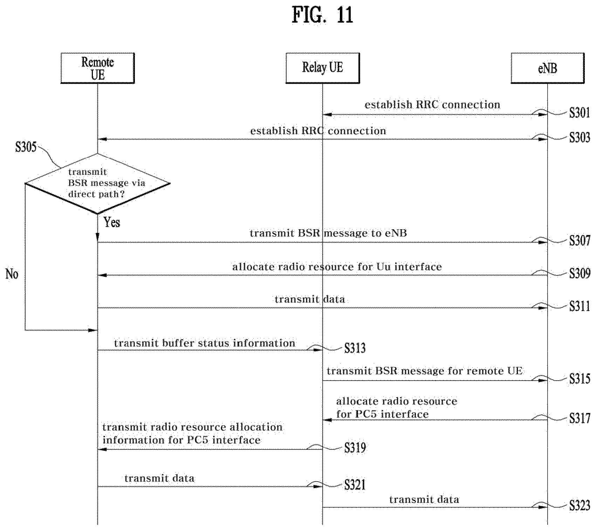

Regarding this, it is explained in detail with reference to FIG 11 in the following.

FIG. 11 is a data flowchart for explaining a method for a remote UE to transmit a BSR (buffer status report) to a base station to allocate a resource according to one embodiment of the present invention.

Referring to FIG. 11, an eNB performs RRC connection with a relay UE and a remote UE and forwards configuration information to the relay UE and the remote UE [S301 to S303]. Since explanation on the detail procedure of the RRC connection configuration of the steps S301 to S303 is mentioned earlier in FIG. 6, it is omitted at this time.

The remote UE, which has established RRC connection with the eNB, determines a path from among a direct path and an indirect path to transmit a BSR message for data stacked on a buffer of the remote UE [S305]. In this case, a condition for selecting a path on which the BSR message is to be transmitted may be identical or similar to a condition capable of being included in the data transmission path calculation condition mentioned earlier in FIG. 8. In particular, in order to provide a user with a service via data stacked on the buffer of the remote UE, the remote UE can transmit the BSR message by selecting a path from among a direct path and an indirect path in consideration of a type of a service, information of the service, characteristic information of the service, characteristic information of the data, a predetermined condition.

For example, if the data included in the buffer of the remote UE corresponds to data related to a voice call service, the remote UE can transmit a BSR via a direct path. If the data included in the buffer of the remote UE corresponds to data related to an internet browsing service, the remote UE can transmit a BSR via an indirect path.

In particular, if the remote UE determines to transmit the BSR via a direct path in consideration of the data transmission path calculation conditions, the remote UE transmits a BSR message to the eNB [S307]. Having received the BSR message, the eNB allocates a radio resource for Uu interface to the remote UE [S309] and the remote UE transmits data to the eNB via the allocated radio resource [S311].

The steps S307 to S311 are not different from a legacy method of allocating a radio resource using a BSR message. In particular, when the remote UE transmits the BSR message, a BSR data structure may be identical to structures shown in FIGS. 10 (a) and (b).

If the remote UE determines to transmit a BSR message to the eNB via an indirect path, the remote UE transmits BSR of the remote UE to the relay UE to request a radio resource for PC5 interface to transmit data [S313]. In this case, the remote UE can transmit the BSR to the relay UE only when the remote UE does not directly transmit the BSR to the eNB. In particular, if the remote UE is directly connected with the eNB, since the remote UE is able to directly request a radio resource for PC5 interface to the eNB, the remote UE may not transmit information on a data amount to be transmitted to the relay UE to the relay UE. However, of course, the remote UE can be configured to forward information on an amount of a buffer of the remote UE to the relay UE depending on a configuration of the eNB.

In the step of S313, when the remote UE transmits the BSR to the relay UE, the remote UE can inform the relay UE that the buffer status report is included in a message transmitted to the relay UE using a specific LCID. For example, if a specific message is transmitted to the relay UE by designating a value from among values ranging from 01011 to 11011, the relay UE is able to know that the BSR is included in the received message.

When the remote UE transmits a message to the relay UE, the message may have a format similar to a BSR message structure shown in FIG. 10. In particular, each channel is indicated using an LCID and it may inform the relay UE of a data amount of the buffer of the remote UE.

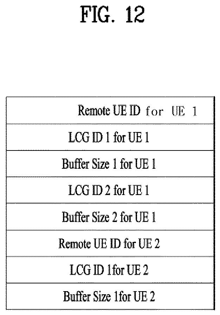

Having received the BSR from the remote UE, the relay UE generates a new BSR message based on the BSR and transmits the generated BSR message to the eNB [S315]. A structure of the BSR message transmitted to the eNB by the relay UE may have 3 types described in the following.
1. The relay UE can transmit BSR information not including an identifier of the remote UE or the relay UE.
   In this case, a BSR message structure may be identical to a legacy BSR message structure shown in FIG. 10. For example, when the relay UE transmits BSR information on a data amount stacked on the buffer of the relay UE or BSR information on a remote UE to the eNB, the relay UE can transmit a BSR message not including a UE identifier. In this case, an LCID of the BSR message may correspond to one selected from the group consisting of 10111, 11100, 11110, and 11101.
2. When the relay UE intends to transmit a BSR message of the relay UE in addition to a BSR message of the remote UE or transmit BSR messages of a plurality of remote UEs, the relay UE can transmit a BSR message including a UE identifier. In this case, a BSR message structure transmitted to the eNB by the relay UE may be identical to a structure shown in FIG. 12. In particular, the relay UE can transmit a BSR message to the eNB using two types. The first BSR message format corresponds to a format not including identifier information and the relay UE uses the first BSR message format to transmit buffer size information on traffic of the relay UE. The second BSR message format corresponds to a format including identifier information and the relay UE use the second BSR message format to inform the eNB of information on a buffer of the remote UE.
   If the second BSR format is used, as shown in FIG. 12, it is able to sequentially transmit an identifier of a remote UE 1, an LCG ID for the remote UE 1, a buffer size corresponding to each LCG, an identifier of a remote UE 2, an LCG ID for the remote UE 2, and a buffer size corresponding to each LCG. If the relay UE uses the second BSR format to include BSR information of the relay UE, in FIG. 12, an identifier of the remote UE 1 or an identifier of the remote UE 2 is replaced with an identifier of the relay UE. An LCG ID and a buffer size are also replaced with an LCG ID and a buffer size of the relay UE.
   Meanwhile, an LCID of the BSR message of the second type may use a different value rather than 10111, 11100, 11110, and 11101. In particular, when an LCID value indicates BSR for forwarding buffer status report of a remote UE, the LCID value may use such a value as 10101 rather than 10111, 11100, 11110, 11101.
3. The relay UE may inform the eNB of a data amount stacked on a buffer of the relay UE and a data amount of the remote UE, respectively.

When the relay UE transmits BSR information of the relay UE to the eNB, the relay UE can transmit the BSR information using an LCID such as 11100, 11110, or 11101. In particular, as shown in FIG. 10, the relay UE uses a long BSR, a short BSR, or a truncated BSR.

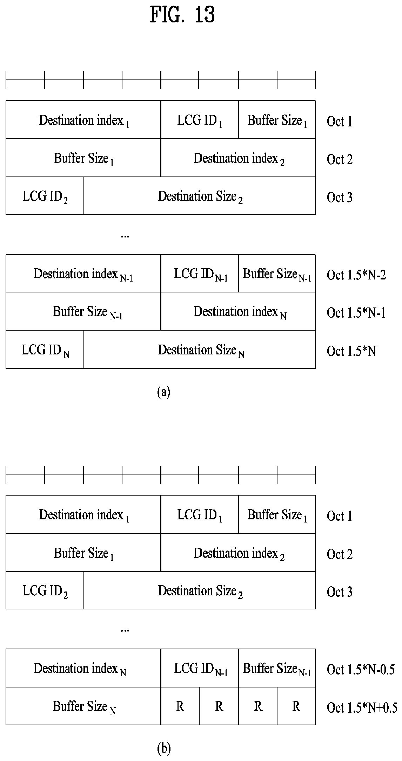

When the relay UE transmits BSR information of the remote UE to the eNB, the relay UE can transmit the BSR information using an LCID such as 10111. In particular, as shown in FIG. 13, the relay UE can use a sidelink BSR. In case of using the sidelink BSR, the relay UE transmits a sidelink BSR message including BSR information of the remote UE rather than BSR information of the relay UE to the eNB via Uu interface.

In other word, a legacy sidelink BSR message used to be transmitted to the eNB by a specific UE A via Uu interface to inform the eNB of information on a data amount to be transmitted to a UE B connected with the UE A via PC5 interface. On the contrary, according to the present invention, the relay UE transmits BSR information of a remote UE, which is unable to be directly connected with the eNB, to the eNB via Uu interface by including the BSR information in a sidelink BSR message.

In this case, a destination index included in the sidelink BSR message structure includes a value set to each of a plurality of remote UEs by the eNB. In particular, in order to use the destination index as an identifier for identifying a remote UE, the eNB assigns a unique destination index to each of remote UEs, the relay UE includes an identifier capable of identifying a destination index of a remote UE, which has transmitted BSR to the relay UE, in a destination index field of the sidelink BSR and transmits the field to the eNB via Uu interface.

Meanwhile, the relay UE can be configured to perform the step S315 only when the relay UE is currently connected with a remote UE via PC5 interface or when the eNB configures the relay UE to receive BSR of a remote UE and transmit the BSR of the remote UE to the eNB. Or, the relay UE can be configured to perform the step S315 only when it is determined as the remote UE is not directly connected with the eNB. In this case, information on whether or not the remote UE is connected with the eNB can be transmitted in a manner of being included in BSR transmitted to the relay UE by the remote UE.

If the eNB receives the BSR message for the remote UE via the step S315, the eNB transmits information indicating allocation of a radio resource for PC5 interface to be used for communication between the remote UE and the relay UE to the relay UE [S317]. Having received the information indicating the allocation of the radio resource for PC5 interface, the relay UE transmits the information to the remote UE [S319]. Subsequently, the remote UE transmits data to the relay UE using the allocated radio resource [S321]. Having received the data from the remote UE, the relay UE transmits the data to the eNB [S323].

In this case, the radio resource for PC5 interface to be used for performing communication between the remote UE and the relay UE may correspond to a radio resource to be used for the remote UE to transmit data to the relay UE.

Meanwhile, according to the embodiment of the present invention, the remote UE may transmit partial data via a direct path and transmit the remaining data via an indirect path instead of selecting a path from among a direct path and an indirect path when a path on which a BSR message is to be transmitted is selected.

For example, when a buffer of a remote UE includes not only data for a voice call service but also data for an internet browsing service, as mentioned in the steps S307 to S311, a BSR message for the voice call data and the voice call data are transmitted via a direct path. And, as mentioned in the steps S313 to S323, a BSR message for the internet browsing data and the internet browsing data can be transmitted via an indirect path.

Meanwhile, in FIG. 11, although it is assumed that the relay UE and the remote UE are connected via PC5 interface, the relay UE and the remote UE can be connected via WLAN as well. If the relay UE and the remote UE are connected via WLAN, the remote UE may not transmit BSR of the remote UE to the relay UE. In particular, when the remote UE manages a data amount transmitted to the relay UE or charging information, the remote UE can manage the charging information by separating a case of transmitting data using WLAN from a case of transmitting data using Prose/PC5.

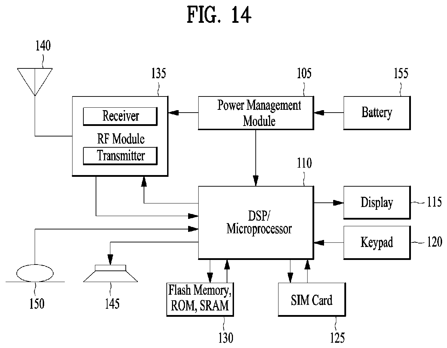

FIG. 14 is a block diagram of a communication apparatus according to an embodiment of the present invention.

The apparatus shown in FIG. 14 can be a user equipment (UE) and/or eNB adapted to perform the above mechanism, but it can be any apparatus for performing the same operation.

As shown in FIG. 14, the apparatus may comprises a DSP/microprocessor (110) and RF module (transmiceiver; 135). The DSP/microprocessor (110) is electrically connected with the transciver (135) and controls it. The apparatus may further include power management module (105), battery (155), display (115), keypad (120), SIM card (125), memory device (130), speaker (145) and input device (150), based on its implementation and designer's choice.

Specifically, FIG. 14 may represent a UE comprising a receiver (135) configured to receive a request message from a network, and a transmitter (135) configured to transmit the transmission or reception timing information to the network. These receiver and the transmitter can constitute the transceiver (135). The UE further comprises a processor (110) connected to the transceiver (135: receiver and transmitter).

The invention and its embodiments are not limited to the examples described in this specification but may vary within the scope of the appended claims.

### INDUSTRIAL APPLICABILITY

Although a method of transmitting and receiving data between an eNB and a remote UE by utilizing D2D communication is explained centering on an example applied to 3GPP LTE system, the method can be applied to various wireless communication systems in addition to 3GPP LTE system.

## Claims

1. A method of transmitting a paging message, which is transmitted to a user equipment, UE, 1 by a base station in a wireless communication system, the method being **characterized by**:
selecting (S209) at least one transmission path from among a first transmission path for directly transmitting the paging message to the UE 1 based on data type information of a downlink data to be transmitted to the UE 1 and a second transmission path for transmitting the paging message to the UE 1 through a UE 2 that relays data transmission and reception between the UE 1 and the base station; and
transmitting the paging message to the UE 1 via the selected transmission path,
wherein the paging message transmitting step transmits the paging message in accordance with at least one paging message monitoring time selected from among paging message monitoring time of the UE 1 and paging message monitoring time of the UE 2, wherein the first transmission path corresponds to a transmission path on which the paging message is transmitted (S215) to the UE 1 by the base station via Uu interface, and wherein when the base station transmits the paging message to the UE 2 via the Uu interface, the second transmission path corresponds to a transmission path on which the paging message is transmitted (S211, S213) to the UE 1 by the UE 2 via PC5 interface.

2. The method of claim 1, wherein the data type information contains at least one selected from the group consisting of information on a type of a service provided by the downlink data and characteristic information of the service.

3. The method of claim 2, wherein the information on the type of the service contains information on whether or not the service requires service continuity.

4. The method of claim 2, wherein the characteristic information of the service contains at least one selected from the group consisting of information on a range of data transmission delay time capable of being permitted to guarantee QoE, Quality of Experience, equal to or greater than a certain level, information on a range of a bit rate, and information on a range of an error rate.

5. The method of claim 1, further comprising the step of receiving the paging message and the data type information from an MME, Mobility Management Entity.

6. The method of claim 1, wherein the data type information is generated by a P-GW, Packet Data Network Gateway.

## Patentansprüche

1. Verfahren zum Übertragen einer Paging-Nachricht, die an ein Benutzergerät, UE, 1 durch eine Basisstation in einem Drahtloskommunikationssystem übertragen wird, wobei das Verfahren **gekennzeichnet ist durch**:
Auswählen (S209) mindestens eines Übertragungspfads von unter einem ersten Übertragungspfad zum direkten Übertragen der Paging-Nachricht an das UE 1 auf der Grundlage von Datenartinformationen von an das UE 1 zu übertragenden Downlink-Daten, und eines zweiten Übertragungspfads zum Übertragen der Paging-Nachricht an das UE 1 **durch** ein UE 2, das Datenübertragung und -empfang zwischen dem UE 1 und der Basisstation weiterleitet; und
Übertragen der Paging-Nachricht an das UE 1 über den ausgewählten Übertragungspfad,
wobei der Paging-Nachricht-Übertragungsschritt die Paging-Nachricht gemäß mindestens einer Paging-Nachricht-Überwachungszeit überträgt, die aus unter einer Paging-Nachricht-Überwachungszeit des UE 1 und einer Paging-Nachricht-Überwachungszeit des UE 2 ausgewählt wurde, wobei der erste Übertragungspfad einem Übertragungspfad entspricht, auf dem die Paging-Nachricht **durch** die Basisstation über eine Uu-Schnittstelle an das UE 1 übertragen wird (S215), und wobei, wenn die Basisstation die Paging-Nachricht über die Uu-Schnittstelle an das UE 2 überträgt, der zweite Übertragungspfad einem Übertragungspfad entspricht, auf dem die Paging-Nachricht **durch** das UE 2 über eine PC5-Schnittstelle an das UE 1 übertragen wird (S211, S213).

2. Verfahren nach Anspruch 1, wobei die Datenartinformation mindestens eine aus der Gruppe ausgewählte enthalten, die aus Informationen über eine Art eines durch die Downlink-Daten bereitgestellten Dienstes und charakteristischen Informationen des Dienstes besteht.

3. Verfahren nach Anspruch 2, wobei die Informationen über die Art des Dienstes Informationen darüber enthalten, ob der Dienst unterbrechungsfreien Dienst erfordert oder nicht.

4. Verfahren nach Anspruch 2, wobei die charakteristischen Informationen des Dienstes mindestens eine aus der Gruppe ausgewählte enthalten, die aus Informationen über einen Bereich von Datenübertragungs-Verzögerungszeit, die dazu fähig ist, zu erlauben, dass eine Erlebnisqualität, QoE, die größer als ein gewisses Niveau ist, garantiert wird, Informationen über einen Bereich einer Bitrate und Informationen über einen Bereich einer Fehlerrate besteht.

5. Verfahren nach Anspruch 1, ferner umfassend den Schritt des Empfangens der Paging-Nachricht und der Datenartinformationen von einer Mobilitätsmanagemententität, MME.

6. Verfahren nach Anspruch 1, wobei die Datenartinformationen durch ein Paketdatennetz-Gateway, P-GW, erzeugt werden.

## Revendications

1. Procédé de transmission d'un message de radiomessagerie, qui est transmis à un équipement utilisateur, UE, 1 par une station de base dans un système de communication sans fil, le procédé étant **caractérisé par** les étapes suivantes :
sélectionner (S209) au moins un chemin de transmission parmi un premier chemin de transmission pour transmettre directement le message de radiomessagerie à l'UE 1 sur la base d'informations de type de données d'une donnée de liaison descendante à transmettre à l'UE 1 et un second chemin de transmission pour transmettre le message de radiomessagerie à l'UE 1 par l'intermédiaire d'un UE 2 qui relaie la transmission et la réception de données entre l'UE 1 et la station de base ; et
transmettre le message de radiomessagerie à l'UE 1 par l'intermédiaire du chemin de transmission sélectionné, où l'étape de transmission du message de radiomessagerie transmet le message de radiomessagerie conformément à au moins un temps de surveillance de message de radiomessagerie sélectionné parmi le temps de surveillance de message de radiomessagerie de l'UE 1 et le temps de surveillance de message de radiomessagerie de l'UE 2, où le premier chemin de transmission correspond à un chemin de transmission sur lequel le message de radiomessagerie est transmis (S215) à l'UE 1 par la station de base par l'intermédiaire de l'interface Uu, et où, lorsque la station de base transmet le message de radiomessagerie à l'UE 2 par l'intermédiaire de l'interface Uu, le second chemin de transmission correspond à un chemin de transmission sur lequel le message de radiomessagerie est transmis (S211, S213) à l'UE 1 par l'UE 2 par l'intermédiaire de l'interface PC5.

2. Procédé selon la revendication 1, dans lequel les informations de type de données contiennent au moins des informations sélectionnées dans le groupe constitué d'informations sur un type de service fourni par les données de liaison descendante et d'informations caractéristiques du service.

3. Procédé selon la revendication 2, dans lequel les informations sur le type de service contiennent des informations sur le fait que le service nécessite ou non une continuité de service.

4. Procédé selon la revendication 2, dans lequel les informations caractéristiques du service contiennent au moins des informations sélectionnées dans le groupe constitué par des informations sur une plage de temps de retard de transmission de données pouvant être autorisée pour garantir une qualité d'expérience, QoE, égale ou supérieure à un certain niveau, des informations sur une plage de débits binaires, et des informations sur une plage de taux d'erreurs.

5. Procédé selon la revendication 1 comprenant en outre l'étape comprenant de recevoir le message de radiomessagerie et les informations de type de données d'une entité de gestion de la mobilité, MME.

6. Procédé selon la revendication 1, dans lequel les informations de type de données sont générées par une passerelle de réseau de données par paquets, P-GW.
